(19) Europäisches Patentamt

European Patent Office

Office européen des brevets

(11) **EP 0 987 348 A1**

(12) **EUROPÄISCHE PATENTANMELDUNG**

(43) Veröffentlichungstag:
    **22.03.2000 Patentblatt 2000/12**

(51) Int. Cl.[7]: **C25B 3/02**

(21) Anmeldenummer: **99114731.5**

(22) Anmeldetag: **26.07.1999**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **14.09.1998 DE 19841872**

(71) Anmelder:
    **CREAVIS Gesellschaft für Technologie
    und Innovation mbH
    45764 Marl (DE)**

(72) Erfinder:
    • **Stochniol, Guido, Dr.
      45770 Marl (DE)**
    • **Duda, Mark, Dr.
      45770 Marl (DE)**
    • **Kühnle, Adolf, Dr.
      45770 Marl (DE)**

(54) **Elektrokatalytische Selektiv-Oxidation von Kohlenwasserstoffen**

(57) Verfahren zur elektrochemischen Oxidation von organischen Verbindungen, wobei als Anodenmaterial ein Mischoxid der allgemeinen Formel

$$Mo_a Bi_b X^1{}_c X^2{}_d X^3{}_e X^4{}_{rf} X^5{}_g O_h \qquad (I)$$

mit

$X^1$ = V, Nb, Cr, W, Ta, Ga, Ce und/oder La,
$X^2$ = Li, La, K, Rb, Cs, Cu, Ag, Au, Pd und/oder Pt,
$X^3$ = Fe, Co, Ni und/oder Zn,
$X^4$ = Sn, Pb, Sb und/oder Te,
$X^5$ = Ti, Zr, Si und/oder Al, wobei
$a$ = 0 bis 3,
$b$ = 0 bis 3,

mit der Maßgabe, daß $a+d \geq 0{,}15$,

$c$ = 0 bis 12,5,
$d$ = 0 bis 5,
$e$ = 0 bis 1,5,
$f$ = 0 bis 1 und
$g$ = 0 bis 25,

verwendet wird.

**EP 0 987 348 A1**

**Beschreibung**

Die Erfindung betrifft ein elektrochemisches Verfahren zur selektiven Herstellung von partiell oxidierten organischen Verbindungen.

Bislang war die direkte selektive Oxidation organischer Verbindungen nur in wenigen Fällen möglich, da die partiell oxidierten Produkte meist reaktiver sind als die eingesetzten Edukte, was zur vollständigen Oxidation unter Bildung von Kohlendioxid führt. Insbesondere das Problem der Direktoxidation von Alkanen konnte bis heute noch nicht zufriedenstellend gelöst werden.

Ausschließlich Maleinsäureanhydrid läßt sich, ausgehend von n-Butan, durch direkte Oxidation herstellen, wobei die Stabilisierung des Oxidationsproduktes durch die Ringbildung eine entscheidende Rolle spielt.

Viele Versuche, die partielle Direktoxidation nicht-reaktiver organischer Verbindungen durchzuführen, konzentrieren sich auf die Entwicklung neuer heterogener Katalysatoren, wobei aber häufig die Ausbeute an dem partialoxidierten Produkt technisch nicht relevant ist.

Demgegenüber wurde der elektrochemischen Partialoxidation weniger Aufmerksamkeit geschenkt. Auf diesem Gebiet stand, im Gegenteil, die Nutzung der Totaloxidation von geeigneten Verbindungen für die Produktion von elektrischer Energie in Brennstoffzellen im Vordergrund der Entwicklungsarbeit.

Ein Beispiel für die elektrochemische Oxidation von organischen Verbindungen ist in US 4 329 208 anhand der Oxidation von Ethen zu Ethylenoxid beschrieben. Diese Oxidation erfolgt an einer Anode, bestehend aus Silber bzw. einer Silberlegierung mittels eines festen Elektrolytsystems aus Zikoniumoxiden.

Ein anderes Verfahren zur elektrochemischen Oxidation von organischen Verbindungen ist in US 4 661 422 offenbart. Hier werden Kohlenwasserstoffe an einer Metall/Metalloxid-Anode in einer Salzschmelze als Elektrolyt oxidiert. Die Salzschmelze enthält Carbonat-, Nitrat- oder Sulfatsalze; die Kathode ist aus Mischoxiden von Metallen der Gruppen I B, II B, III A, V B, VI B, VII B und V III des Periodensystems aufgebaut.

Takehira et al. haben in Catalysis Today **1995**, 25, 371 die partielle Oxidation von Propen in einem Brennstoffzellen ähnlichen Aufbau untersucht. Als Elektrolyt haben sie durch Y stabilisiertes $ZrO_2$ eingesetzt. Als Anodenmaterial diente Au, das ein Mo-Bi-Mischoxid als Katalysator trug, und als Kathodenmaterial Ag. Die Reaktionstemperatur betrug 475 °C

Die Ausbeute an dem jeweils gewünschten Oxidationsprodukt ist in der Regel so niedrig, daß keines dieser Verfahren technische Relevanz besitzt Auch hier ist das Problem der Totaloxidation des organischen Substrats zu Kohlendioxid noch nicht gelöst. Zudem wirkt der Elektrolyt als „Sauerstoff-Pumpe", d. h. der für die Oxidation benötigte Sauerstoff wird an der Kathode reduziert, um dann in ionischer Form zu der Anode durch den Elektrolyten zu wandern. Im Anodenraum befindet sich nur das zu oxidierende Substrat und ggf. ein Inertgas. Das Einspeisen von Sauerstoff in den Anodenraum führt nicht zu einer Erhöhung der Ausbeute an dem gewünschten Oxidationsprodukt.

Nachteilig ist auch, daß die Reaktionstemperatur von der Sauerstoffleitfähigkeit des Elektrolyten bestimmt wird. Die eingesetzten Elektrolyten weisen erst bei Temperaturen, die deutlich über den optimalen Temperaturen für solche Oxidationsreaktionen liegen, eine ausreichende Leitfähigkeit auf, was sicherlich zum Teil die geringe Selektivität der untersuchten Verfahren erklärt.

Insbesondere Verfahren, die Salzschmelzen als Elektrolyt einsetzen, weisen zwangsweise so hohe Reaktionstemperaturen auf (bis zu 750 °C), daß eine Zersetzung der Produkte kaum zu vermeiden ist. Verfahren dieser Art sind zur Herstellung thermisch instabiler Verbindungen (z. B. Michael-Systeme) nicht geeignet.

Die Entdeckung des NEMCA-Effektes (Non Faradaic Elektrochemical Modification of Catalytic Activity) eröffnete die Möglichkeit, wirtschaftlichere elektrochemische Verfahren zu entwickeln. Vayenas et. al. beschrieben in „Studies in Surface Science and Catalysis", R. K. Grasselli, S. T. Oyama, A. M. Gaffney, J. E. Lyons (Editors), 110, 77 (1997) und Science (1994), 264, 1563 ein elektrochemisches Verfahren, basierend auf einem leitfähigen, porösen Metall (-oxid) Film auf einem Festelektrolyten wie z. B. Y stabilisierten $ZrO_2$. Eine gasdichte Abtrennung des Anoden- und Kathodenraumes ist hier nicht mehr notwendig und das Oxidationsmittel kann mit in den Anödenraum eingespeist werden. Es zeigte sich aber, daß das Hauptprodukt der Oxidation, Kohlendioxid, noch immer aus der Totaloxidation des Substrates resultiert und die Selektivität zu einem erwünschten partiell oxidierten Produkt selbst bei geringen Umsätzen sehr niedrig ist.

Aufgabe der vorliegenden Erfindung war daher die Entwicklung eines elektrochemischen Verfahrens zur partiellen Oxidation von organischen Verbindungen.

Überraschenderweise wurde gefunden, das organische Verbindungen elektrochemisch sehr gezielt oxidiert werden können, wenn das Anodenmaterial Mischoxide des Typs $Mo_aBi_bX^1_cX^2_dX^3_eX^4_fX^5_gO_h$ enthält.

Gegenstand der vorliegenden Erfindung ist daher ein Verfahren zur elektrochemischen Oxidation von organischen Verbindungen, wobei als Anodenmaterial ein Mischoxid der allgemeinen Formel $Mo_aBi_bX^1_cX^2_dX^3_eX^4_fX^5_gO_h$ (I) mit

$X^1$ = V, Nb, Cr, W, Ta, Ga, Ce und/oder La,

$X^2$ = Li, La, K, Rb, Cs, Cu, Ag, Au, Pd und/oder Pt,
$X^3$ = Fe, Co, Ni und/oder Zn,
$X^4$ = Sn, Pb, Sb und/oder Te
$X^5$ = Ti, Zr, Si und/oder Al, wobei
a = 0 bis 3,
b = 0 bis 3,
c = 0 bis 12,5,
d = 0 bis 5,
e = 0 bis 1,5,
f = 0 bis 1 und
g = 0 bis 25

mit der Maßgabe, daß a+d ≥ 0,15
eingesetzt wird.

Die Anzahl der Sauerstoffatome h wird durch die Wenigkeit und die Häufigkeit der von Sauerstoff verschiedenen Elemente der Formel (I) bestimmt.

Die Bezeichnung „Mischoxide" im Sinne der vorliegenden Erfindung bezieht Multimetalloxidmassen als nebeneinander vorliegende Metalloxide ein. In jedem Falle sind, abhängig von Stöchiometrie und Temperaturbehandlung der Mischoxide. Phasenausscheidungen möglich.

Mischoxide des obengenannten Typs sind aus einem anderen technischen Gebiet bekannt und werden z. B. als heterogene Katalysatoren für Gasphasenreaktionen eingesetzt. Die Herstellung und die Verwendung dieser Verbindungen kann z. B in EP 0 417 723 nachgelesen werden.

Die Verwendung von Mischoxiden dieses Typs als heterogene Katalysatoren erfolgt in stromlos ablaufenden chemischen Reaktionen, der Einsatz als Anodenmaterial in elektrochemischen Prozessen ist unbekannt

Die Anode kann ganz oder teilweise aus den Mischoxiden der Formel I bestehen. In der Regel kann auch eine bestehende Elektrode, z. B. aus Platin, mit einer Oberfläche aus diesen Mischoxiden ausgerüstet werden.

In der Praxis hat es sich bewährt, zunächst einen Film aus den Mischoxiden mittels Siebdrucktechnik auf den Elektrolyten aufzutragen und durch einen Temperschritt zu verbinden. Ein Beispiel für diese Technik findet sich in JP 09 239 956.

Die elektrokatalytische Schicht hat zweckmäßig eine rauhe Oberfläche mit BET-Oberflächen von 5 bis 20 $m^2/g$.

Die zu oxidierende organische Verbindung wird, gegebenenfalls versetzt mit Sauerstoff und/oder einem Inertgas wie z. B. Stickstoff, an einer solchen Anode vorbeigeleitet. Die Edukte können gasförmig oder flüssig eingespeist waden, jedoch hat sich bei den erfindungsgemäßen Reaktionstemperaturen eine gasförmige Einspeisung bewährt.

Mit Hilfe des erfindungsgemäßen Verfahrens können eine Vielzahl von organischen Verbindungen, wie Aromate, Aliphate, Olefine oder Alicyclen, oxidiert werden. Insbesondere ist die vorliegende Erfindung zur Oxidation von Ethan, Propan, Ethen, Ethin, Propen, Benzol, Butan, Butadien, Buten, Cyclohexan, Octan, Octen, Cyclododecan oder Cyclododecen geeignet.

Als Elektrolyt kann im erfindungsgemäßen Verfahren ein sauerstoffionenleitender Feststoff, insbesondere ein Metalloxid eingesetzt werden.

In einer besonderen Ausführungsform der vorliegenden Erfindung wird als sauerstoffionenleitender Feststoff ein Perowskit der allgemeinen Formel

$$La_iX^6{}_kX^7{}_lMg_mO_n \hspace{3cm} (II)$$

mit

$X^6$ = Ca, Sr, Ba,
$X^7$ = Ga, Al,
i = 0,3 bis 0,9,
k = 0,1 bis 0,7,

mit der Maßgabe, daß i+k = 0,9 bis 1,0 ,

l = 0,3 bis 0,9,
m = 0,1 bis 0,7,

mit der Maßgabe, daß l+m = 1 bis 1,1 ,

eingesetzt.

Die Anzahl der Sauerstoffatome n wird durch die Wenigkeit und die Häufigkeit der von Sauerstoffverschiedenen Elemente der Formel (II) bestimmt.

Als Sauerstoffionen leitende Feststoffe weiterhin geeignete Metalloxide sind beispielsweise durch $CaO$, $Sc_2O_3$, $Y_2O_3$ oder $Yb_2O_3$ stabilisierres $ZrO_2$ oder durch $La_2O_3$, $Y_2O_3$, $Yb_2O_3$ oder $Gd_2O_3$ stabilisiertes $CeO_2$.

In einer weiteren Ausführungsform der vorliegenden Erfindung können als sauerstoffionenleitender Feststoff Pyrochlorverbindungen der allgemeinen Formel

$$(Ln_nX^8_p)_2(X^9_qX^{10}_r)_2O_s \hspace{3cm} (III)$$

mit

Ln = La, Ce, Pr, Nd, Pm, Sm, Eu, Gd, Tb, Dy, Ho, Er, Tm, Yb oder Lu,
$X^8$ = Mg, Ca oder Sr,
$X^9$ = Ti oder Zr,
$X^{10}$ = Fe, Al, Sc, Ga oder Y,
o = 0,4 bis 1,
p = 0 bis 0,6,
q = 0,4 bis 1,
r = 0 bis 0,6 und

eingesetzt werden.

Die Anzahl der Sauerstoffatome s wird durch die Wertigkeit und die Häufigkeit der von Sauerstoff verschiedenen Elemente der Formel (III) bestimmt.

Diese Verbindungen können z. B mittels „drip pyrolysis" [P. Gordes et al., Den. J. Mater. Sci. (1995), 30 (4), 1053-8] oder Zersetzungsmethoden [z. B.: N. Dhas et al., India J. Mater. Chem. (1993), 3 (12), 1289-1294, oder D. Fumo et al., Port. Mater Res. Bull. (1997), 32 (10), 1459-1470] hergestellt werden.

Als Kathode kann in erfindungsgemäßen Verfahren ein Metall, bevorzugt Silber oder Platin eingesetzt werden.

Weiterhin können als Kathode ein oder mehrere Metalloxide oder ein Mischmetalloxid eingesetzt werden.

Darüber hinaus können als Kathode Perowskite der allgemeinen Formel

$$La_tX^{11}_uX^{12}_vX^{13}_wX^{14}_xO_{3\pm y} \hspace{3cm} (IV)$$

mit

$X^{11}$ = Ce, Pr, Nd, Pm, Sm, Eu, Gd, Tb, Dy, Ho, Er, Tm, Yb oder Lu,
$X^{12}$ = Ca, Sr, Ba,
$X^{13}$ = Mn, Fe,
$X^{14}$ = Cr, Co, Ni, Al,
t = 0,5 bis 1,
u = 0 bis 0,5,
v = 0,1 bis 0,4,

mit der Maßgabe, daß $t+u+v \leq 1$ ,

w = 0,6 bis 1,1,
x = 0 bis 0,7

mit der Maßgabe, daß $w+x \geq 1$

eingesetzt werden.

Die Maßgaben bezüglich der Summen aus t, u und v ($\leq 1$) sowie w und x ($\geq 1$) stellen bestimmte Ausführungsformen der vorliegenden Erfindung dar. In anderen Ausführungsformen kann $t + u + v$ zwischen 0,85 und 1 liegen. Weiterhin kann $w + x$ zwischen 1 und 1,1 liegen.

Die Anzahl der Sauerstoffatome ($3\pm y$) wird durch die Wertigkeit und Häufigkeit der von Sauerstoff verschiedenen Elemente definiert.

In DE-PS 197 02 619 C1 wird die Herstellung nicht stöchiometrischer Perowskite der Formel $L_wM_xMn_yCo_2O_3$ als Kathodenmaterial für Hochtemperatur-Brennstoffzellen beschrieben Brennstoffzellen sind jedoch für einen anderen technischen Prozeß, der Produktion von elektrischer Energie unter Totaloxidation eines Substrats entwickelt worden.

Die elektrochemische Oxidation von organischen Verbindungen gemäß dem erfindungsgemäßen Verfahren wird bei erhöhten Temperaturen, bevorzugt 200 bis 750 °C, besonders bevorzugt 250 bis 550 °C durchgeführt.

Die Anwendung von erhöhten Drücken ist ebenfalls möglich; es können Drücke von 1 bis 100 bar, bevorzugt 1 bis 10 bar angelegt werden.

Beim erfindungsgemäßen Verfahren wird einerseits Sauerstoff an der Kathode in eine ionische Form überführt und durch den Elektrolyten zu der Anode geleitet und andererseits an der Anode so aktiviert, daß eine Reaktion mit der vorbei geführten organischen Verbindung erfolgt. Dabei kann die Einspeisung des Sauerstoff auch durch einen porösen, nicht gasdichten Festelektrolyten erfolgen. Der Gasstrom im Anodenraum kann außer der zu oxidierenden organischen Verbindung und Sauerstoff auch noch ein Inertgas enthalten.

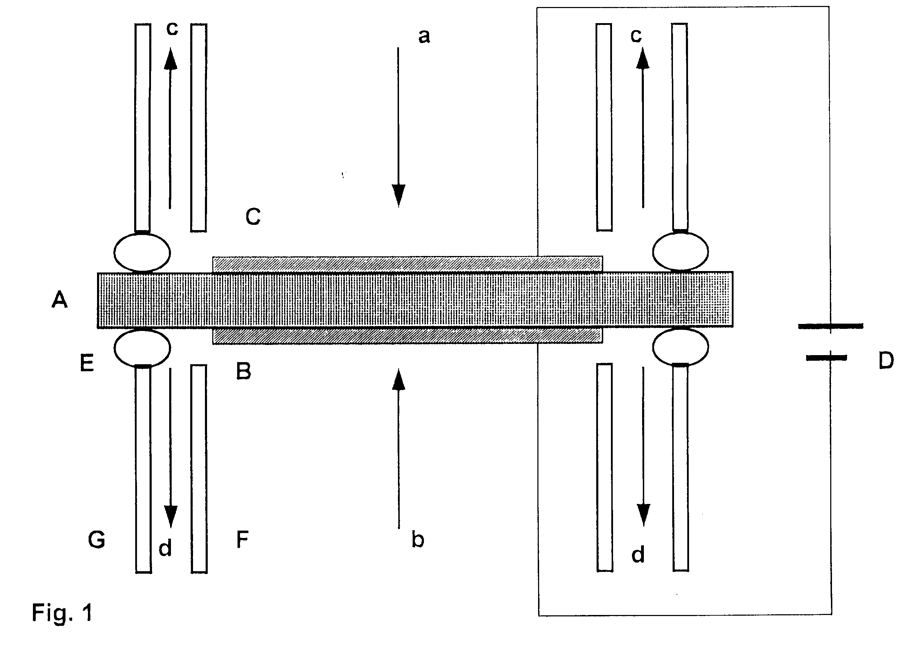

Ein exemplarischer Aufbau einer Vorrichtung zur Ausführung des erfindungsgemäßen Verfahrens ist in Fig. 1 dargestellt.

Die Kathode B und die Anode C sind auf dem Sauerstoffionen leitenden Elektrolyten A aufgebracht. Hier ist auf eine Strom leitende Verbindung der Materialien, z. B. durch Tempern, zu achten. Die beiden Elektroden werden über die Spannungsquelle D mit Strom versorgt. Die Gasströme werden über eine äußere Gasführung G und eine innere Gasführung F zur bzw. von den Elektroden geleitet, wobei die Zelle über Dichtungen E der äußeren Gasführungen G nach außen abgedichtet wird.

Edukt und Sauerstoff werden als Gasstrom a) auf die Anode C geleitet, das resultierende Produktgas c) wird entweder durch den Druck des Gasstroms a) oder mittels eines entsprechenden Unterdrucks abgeführt. Gasstrom b) auf der Kathodenseite kann aus Luft, Sauerstoff oder einem sonstigen sauerstoffhaltigen Gasgemisch bestehen und wird - abgereichert an Sauerstoff - über die Gasströme d) abgeführt.

Die räumliche Anordnung von Anode, Kathode und Elektrolyt ist nicht auf ebene Platten oder durchgehende Schichten beschränkt. Es ist auch möglich, Rohrreaktoren für das erfindungsgemäße Verfahren einzusetzen. Hier werden entweder Anoden- und Kathodenmaterialien auf ein Rohr aus dem Elektrolyten aufgebracht oder eine Trägerröhre aus einen inerten Material (beispielsweise $Al_2O_3$) mit entsprechenden Schichten versehen. Die nötigen Stromzuführungen sind entsprechend anzupassen.

Weiterhin kennen Anoden- oder Kathodenschicht als Gewebe oder strukturierte Oberflächenschicht mit regelmäßigen Vertiefungen oder Erhebungen ausgelegt sein.

Die nachfolgenden Beispiele sollen die Erfindung näher erläutern, ohne ihren Umfang zu beschränken.

**Beispiele:**

1. Katalytische Oxidation von Propen **(Vergleichsbeispiel)**

Ein poröser katalytischer Film mit einer BET-Oberfläche von 16 $m^2$/g wird durch Siebdrucktechnik und anschließendes Tempern auf eine Elektrolytfolie $La_{0,8}Sr_{0,2}Ga_{0,85}Mg_{0,15}O_2$, aufgebracht. Als Gegenelektrode wird Pt aufgedampft. Die Reaktionstemperatur betrag 400 °C. Eine Mischung aus 5 % Propen, 5 % Sauerstoff und 90 % Stickstoff wird mit 2 l/h über die Anode geleitet. Luft mit der gleichen Rate wird über die Kathode geleitet.

Ergebnisse:

| Anodenmaterial (katalytischer Film) | Acroleinbildung [mmol/h*g] |
|---|---|
| $MoO_3$ | 0.05 |
| $Mo_3Bi_{1,25}FeCo_2Ca_{0,025}K_{0,025}O_x$ | 0.25 |
| $Mo_3Bi_{0,25}Ni_{2,07}Fe_{0,49}Si_{2,5}K_{0,0125}Na_{0,0375}O_x$ | 0.45 |

2. Elektrokatalytische Oxidation von Propen unter faradayschen Bedingungen

Ein poröser katalytischer Film mit einer BET-Oberfläche von 16 $m^2$/g wird durch Siebdrucktechnik und anschließendes Tempern auf eine Elektrolytfolie $La_{0,8}Sr_{0,2}Ga_{0,85}Mg_{0,15}O_2$, aufgebracht. Als Gegenelektrode wird Pt aufgedampft. Die Reaktionstemperatur beträgt 400 °C. Eine Mischung aus 5 % Propen und 95 % Stickstoff wird mit 2 l/h über die Anode geleitet. Luft mit der gleichen Rate wird über die Kathode geleitet. Die angelegte Spannung zur Kontrolle des Sauerstoffionenflusses beträgt 1 V.

Ergebnisse:

| Anodenmaterial (katalytischer Film) | Acroleinbildung [mmol/h*g] |
|---|---|
| $MoO_3$ | 0.75 |
| $Mo_3Bi_{1,25}FeCo_2Ca_{0,025}K_{0,025}O_x$ | 0.45 |
| $Mo_3Bi_{0,25}Ni_{2,07}Fe_{0,49}Si_{2,5}K_{0,0125}Na_{0,0375}O_x$ | 0.85 |

3. Elektrokatalytische Oxidation von Propen mit Sauerstoff im Edukt-Strom

Ein poröser katalytischer Film mit einer BET-Oberfläche von 16 $m^2$/g wird durch Siebdrucktechnik und anschließendes Tempern auf eine Elektrolytfolie $La_{0,8}Sr_{0,2}Ga_{0,85}Mg_{0,15}O_2$, aufgebracht. Als Gegenelektrode wird Pt aufgedampft. Die Reaktionstemperatur beträgt 400 °C. Eine Mischung auf 5 % Propen, 5 % Sauerstoff und 90 % Stickstoff wird mit 2 l/h über die Anode geleitet. Luft mit der gleichen Rate wird über die Kathode geleitet. Die angelegte Spannung zur Kontrolle des Sauerstoffionenflusses beträgt 0-3 V. Unter diesen Bedingungen arbeitet der elektrochemische Reaktor unter faradayschen Bedingungen.

Ergebnisse:

| Anodenmaterial (katalytischer Film) | Acroleinbildung [mmol/h*g] |
|---|---|
| $MoO_3$ | 2.5 |
| $Mo_3Bi_{1,25}FeCo_2Ca_{0,025}K_{0,025}O_x$ | 1.1 |
| $Mo_3Bi_{0,25}Ni_{2,07}Fe_{0,49}Si_{2,5}K_{0,0125}Na_{0,0375}O_x$ | 3.2 |

**Patentansprüche**

1.    Verfahren zur elektrochemischen Oxidation von organischen Verbindungen,
      dadurch gekennzeichnet,
      daß als Anodenmaterial ein Mischoxid der allgemeinen Formel

$$Mo_aBi_bX^1{}_cX^2{}_dX^3{}_eX^4{}_fX^5{}_gO_h \tag{I}$$

      mit

$X^1$    = V, Nb, Cr, W, Ta, Ga, Ce und/oder La,
$X^2$    = Li, La, K, Rb, Cs, Cu, Ag, Au, Pd und/oder Pt,
$X^3$    = Fe, Co, Ni und/oder Zn,
$X^4$    = Sn, Pb, Sb und/oder Te,
$X^5$    = Ti, Zr, Si und/oder Al, wobei
a        = 0 bis 3,
b        = 0 bis 3,
c        = 0 bis 12,5,
d        = 0 bis 5,

e        = 0 bis 1,5,

f        = 0 bis 1 und

g        = 0 bis 25,

mit der Maßgabe, daß $a+d \geq 0,15$ ,
eingesetzt wird.

2.  Verfahren nach Anspruch 1,
    dadurch gekennzeichnet,
    daß als Elektrolyt ein sauerstoffionenleitender leitender Feststoff eingesetzt wird.

3.  Verfahren nach Anspruch 2,
    dadurch gekennzeichnet,
    daß der Sauerstoffionen leitende Feststoff ein Metalloxid enthält.

4.  Verfahren nach Anspruch 3,
    dadurch gekennzeichnet,
    daß der Sauerstoffionen leitende Feststoff ein Perowskit der allgemeinen Formel

$$La_i X^6{}_k X^7{}_l Mg_m O_n \qquad\qquad (II)$$

mit

$X^6$        = Ca, Sr, Ba,

$X^7$        = Ga, Al,

i        = 0,3 bis 0,9,

k        = 0,1 bis 0,7,

mit der Maßgabe, daß i+k = 0,9 bis 1,0 ,

l        = 0,3 bis 0,9,

m        = 0,1 bis 0,7,

mit der Maßgabe, daß l+m = 1 bis 1,1 ,
eingesetzt wird.

5.  Verfahren nach Anspruch 2,
    dadurch gekennzeichnet,
    daß als sauerstoffionenleitender Feststoff durch $CaO$, $Sc_2O_3$, $Y_2O_3$ oder $Yb_2O_3$ stabilisiertes $ZrO_2$ oder durch $La_2O_3$, $Y_2O_3$, $Yb_2O_3$ oder $Gd_2O_3$ stabilisierte $CeO_2$ eingesetzt wird.

6.  Verfahren nach Anspruch 2,
    dadurch gekennzeichnet,
    daß als sauerstoffionenleitender Feststoff eine Pyrochlorverbindung der allgemeinen Formel (

$$Ln_o X^8{}_p)_2 (X^9{}_q X^{10}{}_r)_2 O_s \qquad\qquad (III)$$

mit

Ln        = La, Ce, Pr, Nd, Pm, Sm, Eu, Gd, Tb, Dy, Ho, Er, Tm, Yb oder Lu,

$X^8$        = Mg, Ca oder Sr,

$X^9$        = Ti oder Zr,

$X^{10}$        = Fe, Al, Sc, Ga oder Y,

o        = 0,4 bis 1,

p        = 0 bis 0,6,

q        = 0,4 bis 1,

r        = 0 bis 0,6,

eingesetzt wird.

7. Verfahren nach einem der Ansprüche 1 bis 6,
dadurch gekennzeichnet,
daß als Kathode ein Metall eingesetzt wird.

8. Verfahren nach Anspruch 7,
dadurch gekennzeichnet,
daß als Kathode Silber oder Platin eingesetzt wird.

9. Verfahren nach einem der Ansprüche 1 bis 6,
dadurch gekennzeichnet,
daß als Kathode ein oder mehrere Metalloxide oder ein Metallmischoxid eingesetzt wird.

10. Verfahren nach Anspruch 9,
dadurch gekennzeichnet,
daß als Kathode ein Perowskit der allgemeinen Formel

$$La_t X^{11}_u X^{12}_v X^{13}_w X^{14}_x O_{3\pm y} \qquad\qquad (IV)$$

mit

$X^{11}$ = Ce, Pr, Nd, Pm, Sm, Eu, Gd, Tb, Dy, Ho, Er, Tm, Yb oder Lu,
$X^{12}$ = Ca, Sr, Ba,
$X^{13}$ = Mn, Fe,
$X^{14}$ = Cr, Co, Ni, Al,
$t$ = 0,5 bis 1,
$u$ = 0 bis 0,5,
$v$ = 0,1 bis 0,4,

mit der Maßgabe, daß $t+u+v \leq 1$,

$w$ = 0,6 bis 1,1,
$x$ = 0 bis 0,7,

mit der Maßgabe, daß $w+x \geq 1$,
eingesetzt wird.

11. Verfahren nach einem der Ansprüche 1 bis 10,
dadurch gekennzeichnet,
daß die elektrochemische Oxidation bei Temperaturen von 200 bis 750 °C durchgeführt wird.

12. Verfahren nach Anspruch 11,
dadurch gekennzeichnet,
daß die elektrochemische Oxidation bei Temperaturen von 250 bis 500 °C durchgeführt wird.

13. Verfahren nach einem der Ansprüche 1 bis 12,
dadurch gekennzeichnet,
daß die elektrochemische Oxidation bei Drücken von 1 bis 100 bar durchgeführt wird.

14. Verfahren nach Anspruch 13,
dadurch gekennzeichnet,
daß die elektrochemische Oxidation bei Drücken von 1 bis 10 bar durchgeführt wird.

Fig. 1

**Europäisches Patentamt**

# EUROPÄISCHER RECHERCHENBERICHT

Nummer der Anmeldung

EP 99 11 4731

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 766 330 A (THE STANDARD OIL COMPANY) 2. April 1997 (1997-04-02)<br><br>* Seite 11, Zeile 9 – Zeile 46 *<br>* Seite 15, Zeile 22 – Seite 16, Zeile 29 *<br><br>--- | 1-3,5, 7-9, 11-14 | C25B3/02 |
| X | TSUNODA T ET AL: "ALKENE OXIDATION OVER THE MO-BI MIXED OXIDES/AU YTTRIA-STABILIZEDZIRCONIA AG SYSTEM" JOURNAL OF THE CHEMICAL SOCIETY. FARADAY TRANSACTIONS,GB,ROYAL SOCIETY OF CHEMISTRY, CAMBRIDGE, Bd. 91, Nr. 7, Seite 1117-1124 XP000497531 ISSN: 0956-5000 Siehe das ganze Dokument<br><br>--- | 1-3,5,7, 8,11,12 | |
| X | TSUNODA T ET AL: "ALKENE OXIDATION OVER THE (PB,BR)MOO4/AU/YTTRIA-STABILIZED ZIRCONIA/AG SYSTEM" JOURNAL OF THE CHEMICAL SOCIETY. FARADAY TRANSACTIONS,GB,ROYAL SOCIETY OF CHEMISTRY, CAMBRIDGE, Bd. 91, Nr. 7, Seite 1125-1130 XP000497532 ISSN: 0956-5000 Siehe das ganze Dokument<br><br>--- | 1-3,5,7, 8,11,12 | |
| A | US 4 524 236 A (UNION CARBIDE CORPORATION) 18. Juni 1985 (1985-06-18) * Spalte 10; Ansprüche 1-4 *<br><br>----- | 1 | |

**RECHERCHIERTE SACHGEBIETE (Int.Cl.7)**

C25B

Der vorliegende Recherchenbericht wurde für alle Patentansprüche erstellt

| Recherchenort | Abschlußdatum der Recherche | Prüfer |
|---|---|---|
| DEN HAAG | 25. Januar 2000 | Groseiller, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 4731

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2000

| Im Recherchenbericht angeführtes Patentdokument | | Datum der Veröffentlichung | Mitglied(er) der Patentfamilie | | Datum der Veröffentlichung |
|---|---|---|---|---|---|
| EP 766330 | A | 02-04-1997 | US | 5306411 A | 26-04-1994 |
| | | | AT | 152859 T | 15-05-1997 |
| | | | AU | 6838290 A | 04-07-1991 |
| | | | CA | 2032994 A | 28-06-1991 |
| | | | CN | 1055205 A | 09-10-1991 |
| | | | CN | 1227976 A | 08-09-1999 |
| | | | CN | 1227977 A | 08-09-1999 |
| | | | DE | 69030651 D | 12-06-1997 |
| | | | DE | 69030651 T | 21-08-1997 |
| | | | EP | 0438902 A | 31-07-1991 |
| | | | ES | 2100877 T | 01-07-1997 |
| | | | JP | 6056428 A | 01-03-1994 |
| | | | NO | 905556 A | 28-06-1991 |
| | | | NZ | 233786 A | 26-10-1993 |
| | | | NZ | 236632 A | 26-07-1994 |
| | | | US | 5591315 A | 07-01-1997 |
| | | | US | 5714091 A | 03-02-1998 |
| | | | US | 5723035 A | 03-03-1998 |
| | | | US | 5744015 A | 28-04-1994 |
| | | | US | 5693212 A | 02-12-1997 |
| | | | AT | 137421 T | 15-05-1996 |
| | | | AU | 5596290 A | 29-11-1990 |
| | | | CA | 2017243 A | 25-11-1990 |
| | | | CN | 1048169 A,B | 02-01-1991 |
| | | | DE | 69026752 D | 05-06-1996 |
| | | | EP | 0399833 A | 28-11-1990 |
| | | | EP | 0673675 A | 27-09-1995 |
| | | | JP | 3101833 A | 26-04-1991 |
| | | | NO | 304808 B | 15-02-1999 |
| US 4524236 | A | 18-06-1985 | AU | 587981 B | 07-09-1989 |
| | | | AU | 4428885 A | 02-01-1986 |
| | | | BR | 8503080 A | 11-03-1986 |
| | | | CA | 1229351 A | 17-11-1987 |
| | | | DE | 3562225 A | 26-05-1988 |
| | | | EP | 0167109 A | 08-01-1986 |
| | | | JP | 1686453 C | 11-08-1992 |
| | | | JP | 3054927 B | 21-08-1991 |
| | | | JP | 61015849 A | 23-01-1986 |
| | | | MX | 167427 B | 22-03-1993 |
| | | | NO | 852592 A,B, | 30-12-1985 |
| | | | YU | 108185 A | 31-10-1987 |
| | | | ZA | 8504882 A | 26-02-1986 |

Für nähere Einzelheiten zu diesem Anhang : siehe Amtsblatt des Europäischen Patentamts, Nr.12/82

EPO FORM P0461